# EUROPÄISCHE PATENTSCHRIFT

(11) **EP 1 452 850 B1**
(45) Veröffentlichungstag und Bekanntmachung des Hinweises auf die Patenterteilung: **13.09.2006**
(21) Anmeldenummer: 04003583.4
(22) Anmeldetag: 18.02.2004
(51) Int. Cl.: G01N 13/02

(54) **Verfahren und System zur Bestimmung der Oberflächenspannung nach Blasendruckmethode**
Method and device for determining surface tension by the bubble pressure method
Méthode et dispositif pour détermination de tensions superficielles par bullage

(30) Priorität: 25.02.2003 DE 10308198
(43) Veröffentlichungstag der Anmeldung: 01.09.2004
(73) Patentinhaber: Miele & Cie. KG, 33332 Gütersloh (DE)
(72) Erfinder: Bicker, Rainer, 33334 Gütersloh (DE); Finke, Michael, 33161 Hövelhof (DE); Müller, Helge, 33332 Gütersloh (DE)

(56) Entgegenhaltungen:
- EP-A- 0 760 472
- EP-A- 1 154 255
- DE-A- 10 110 213
- DE-A- 19 653 752

## Beschreibung

Die Erfindung betrifft ein Verfahren zur Bestimmung der Oberflächenspannung einer in einem Behälter befindlichen Lösung, insbesondere einer Tensidlösung, nach der Blasendruckmethode, mit einer Kapillare zur Einleitung eines gasförmigen Volumenstroms in die Lösung und einem Drucksensor zur Ermittlung des zeitabhängigen Druckverlaufs dieses Volumenstroms während der Blasenbildung. Außerdem betrifft die Erfindung ein System zur Durchführung eines solchen Verfahrens umfassend eine Verschlusseinrichtung (2) für die Kapillare (11) mit einer Reinigungsnadel (25), welche von einer Messstellung in eine Verriegelungsstellung bewegbar ist, wobei in der Verriegelungsstellung die Kapillare (11) gegenüber der Lösung (3) flüssigkeitsdicht verschlossen ist.

Ein Verfahren bzw. ein System dieser Art ist beispielsweise aus der DE 195 29 787 A1 bzw. EP 0 760 472 A2 bekannt.

Die Messung der dynamischen Oberflächenspannung nach der Blasendruckmethode basiert auf der Abhängigkeit der Oberflächenspannung vom Druck bei der Bildung gekrümmter Oberflächen. Aus der DE 41 12 417 A1 und aus der DE 195 29 787 A1 ist es beispielsweise bekannt, die Waschmittelkonzentration eines Waschmittel-Wasser-Gemischs (Waschflüssigkeit, beispielsweise im Laugenbehälter einer Waschmaschine) durch eine Messung der Oberflächenspannung zu ermitteln. Der Vorteil der Blasendruckmethode ist dabei, dass die Oberflächenspannung an verschieden alten Oberflächen (dynamisch) bestimmt werden kann. Je langsamer eine Blase erzeugt wird, umso mehr Zeit haben Tenside, sich an die Oberfläche zu begeben und die Oberflächenspannung herabzusetzen. Diese Geschwindigkeit der Tenside wird bei dieser Methode mit erfasst (s. DE 100 29 505 A1).

Bei der Blasendruckmethode wird an einer Kapillare über einen kontinuierlich anliegenden Luftstrom eine Blase in der Waschflüssigkeit erzeugt. Die Druckdifferenz der sich bildenden und abreißenden Blase ist dann proportional zur Oberflächenspannung. Zur Erzeugung der Blasen wird durch ein enges Kapillarröhrchen ein gasförmiges Medium, i. A. Luft, in die zu sensierende Waschflüssigkeit gebracht. Wird dieses Kapillarröhrchen direkt im Laugenbehälter angeordnet, so besteht die Gefahr, dass die Kapillaröffnung nach einiger Zeit durch Schmutzpartikel verstopft wird. Dieses Problem wird vergrößert, wenn die Gasblasen mit einer Pumpe erzeugt werden und diese nach dem Messvorgang bei gefülltem Laugenbehälter ausgeschaltet wird. Dann läuft Flüssigkeit in die Kapillare und läuft weiter in den Schlauch, an dem die Kapillare angeschlossen ist. Falls sich in diesem Schlauch eine Kalk- oder Schmutzschicht bildet und sich später löst, werden von der Pumpe die gelösten Teilchen in die Kapillare geblasen und die Kapillare wird verstopft. Um das zu verhindern, wird in der DE 100 25 430 A1 vorgeschlagen, bei einer Waschmaschine die Kapillare zur Messung der Oberflächenspannung in einem Gefäß in der Laugenbehälterwand unterzubringen, das durch Schöpfeinrichtungen an der Waschtrommel gefüllt wird. Außerdem sollte es durch zulaufendes Wasser regelmäßig gereinigt werden. Zum Leeren des Gefäßes wird die Unwucht beim Schleudern verwendet. Nachteilig dabei ist, dass das Leeren des Gefäßes durch die Unwucht nicht definiert möglich ist, da mal mehr, mal weniger Unwucht beim Schleudern auftritt. Außerdem ist es nötig, eine Schöpfeinrichtung an der Waschtrommel anzubringen, was aus Platzgründen nicht einfach zu realisieren ist.

Aus der DE 100 22 863 A1 ist es bekannt, die Kapillare in eine Messkammer einmünden zu lassen, in der durch Unterdruck eine über die Mündungshöhe der Kapillare ansteigende Flüssigkeitssäule erzeugbar ist. Hierdurch wird sichergestellt, dass die Gasströmung in der Kapillare immer in Richtung der flüssigkeitsgefüllten Messkammer verläuft. Damit sollte die Verstopfungsgefahr gering sein, durch die Kapillarwirkung und durch Abkühlung bedingten Unterdruck in der Messkammer werden trotzdem geringe Flüssigkeitsmengen in die Kapillare gesaugt. Bereits geringe Flüssigkeitsmengen führen zur Ausbildung weiterer Luft-Flüssigkeits-Grenzschichten innerhalb der Messkammer und stören die Messung. Nun würde durch eine Reinigungsmaßnahme (Durchstechen, aus der DE 195 29 787 A1 bekannt) zwar erreicht, dass die Geometrie der Öffnung erhalten bleibt und diese nicht zuwächst. Auch hierdurch kann aber ein Eindringen von Flüssigkeit in die Messkammer nicht verhindert werden.

Aus der DE 196 53 752 A1 ist ein Verfahren und eine Einrichtung zur Reinigung von Prozessmesszellen mit Kapillaren bekannt, bei dem eine kombinierte Anwendung von Ultraschall in Verbindung mit einem Reinigungsgas- und Flüssigkeitsstrom erfolgt. Für eine breite Anwendung in Geräten der Haushaltstechnik wie Waschmaschinen und Geschirrspülern ist eine solche Einrichtung zu teuer.

In der DE 198 19 555 A1 und der DE 101 10 213 A1 ist auch das Problem der Verunreinigung einer Kapillare bei Messungen nach der Blasendruckmethode beschrieben und es werden Abhilfen erläutert. In der DE 198 19 555 A1 wird eine Ultraschallreinigung vorgeschlagen, in der DE 101 10 213 A1 das Ausstatten der Kapillare mit hydrophoben Eigenschaften (Teflonbeschichtung, Silanisieren).

Der Erfindung stellt sich somit das Problem, ein Verfahren bzw. ein System zur Bestimmung der Oberflächenspannung der eingangs genannten Art zu offenbaren, bei dem eine Verschmutzung der Kapillare sicher und mit geringem Aufwand verhindert wird.

Erfindungsgemäß wird dieses Problem durch ein Verfahren mit den Merkmalen des Patentanspruchs 1 bzw. durch ein System mit den Merkmalen des Patentanspruchs 2 gelöst. Vorteilhafte Ausgestaltungen und Weiterbildungen des erfindungsgemäßen Systems ergeben sich aus den nachfolgenden Unteransprüchen.

Die mit der Erfindung erreichbaren Vorteile bestehen darin, dass Verschmutzungen an der Kapillare nicht nachträglich beseitigt, sondern dass bereits ihre Entstehung verhindert wird.

In einer zweckmäßigen Ausführungsform des erfindungsgemäßen Systems erfolgt eine Betätigung der Verschlusseinrichtung durch eine Steuereinrichtung, welche in Verbindung mit der Auswerteschaltung zur Ermittlung des zeitabhängigen Druckverlaufs des Volumenstroms steht.

Bei einer vorteilhaften Ausführungsform des Systems ist die Länge der Kapillare höchstens so groß wie ihr Durchmesser. Hierdurch wird erreicht, dass auch bei einer durch Ablagerung stark benetzbaren Kapillarwand die Anfangskrümmung der Blase hinreichend gering für ein sicheres Detektieren des Zeitpunkts des Druckminimums ist.

Es ist vorteilhaft, wenn die Kapillare eine erste Mündungsöffnung besitzt, die zur Lösung hin gerichtet ist und eine zweite Öffnung, die in eine Messkammer mündet, und wenn die Verschlusseinrichtung eine Reinigungsnadel besitzt, welche von der Messkammer her in die zweite Öffnung fahrbar ist. Hierdurch erfolgt eine zusätzliche Reinigung von Ablagerungen, die sich trotz des Verschließens der Kapillare an der Kapillar-Innenwand abgesetzt haben. Insbesondere ist es bei einem solchen System vorteilhaft, wenn die Reinigungsnadel von einer Dichtung umgeben ist, welche in der Verriegelungsstellung der Verschlusseinrichtung an der Wand der Messkammer anliegt, in welche die Kapillare mündet. Hierdurch wird die Kapillare sicher verschlossen. In zweckmäßigen Ausführungsformen kann die Verschlusseinrichtung auf einfache Weise pneumatisch oder elektromagnetisch bewegt werden.

Ein Ausführungsbeispiel der Erfindung ist in den Zeichnungen rein schematisch dargestellt und wird nachfolgend näher beschrieben. Es zeigen
- Figur 1a,b: die Kapillareinheit eines Systems zur Bestimmung der Oberflächenspannung mit Verschlusseinrichtung (2) in Verriegelungsstellung (Fig. 1a) und Messstellung (Fig. 1b);
- Figur 2: das Prinzipschaltbild eines Systems zur Bestimmung der Oberflächenspannung mit pneumatisch bewegter Verschlusseinrichtung (2) unter Verwendung von zwei Pumpen (209, 210);
- Figur 3: das Prinzipschaltbild eines Systems zur Bestimmung der Oberflächenspannung mit elektromagnetisch bewegter Verschlusseinrichtung (2);
- Figur 4: das Prinzipschaltbild eines Systems zur Bestimmung der Oberflächenspannung mit pneumatisch bewegter Verschlusseinrichtung unter Verwendung von einer Pumpe (407) und einer Ventilsteuerung.

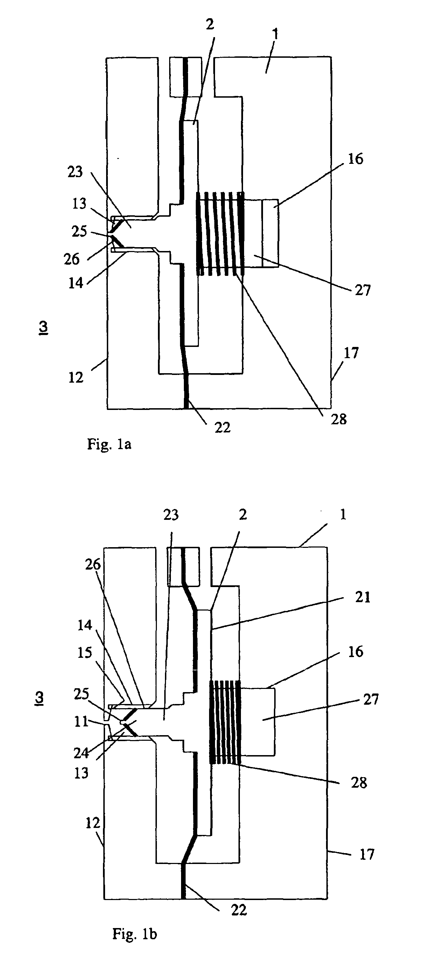

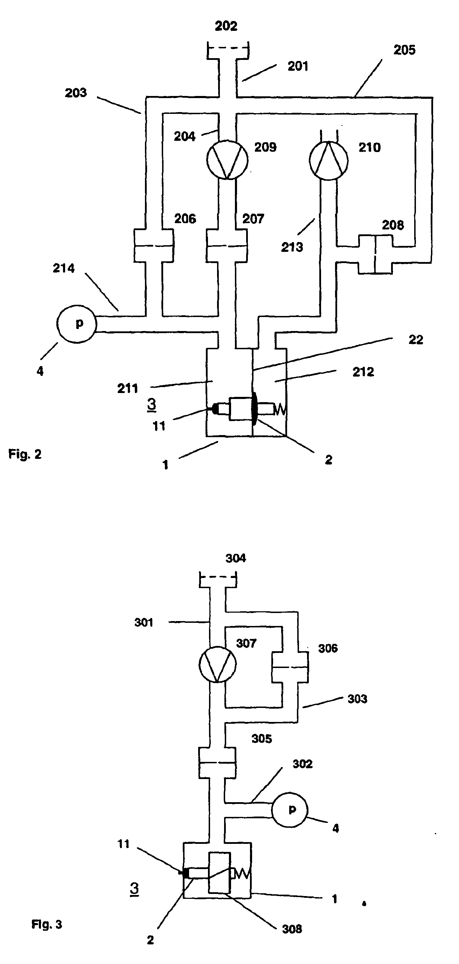

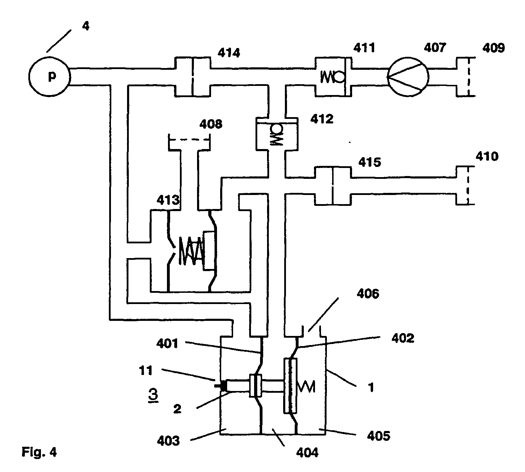

Die Figuren 1a und 1b zeigen den allgemeinen Aufbau einer Kapillareinheit mit Verschlusseinrichtung (2) im Schnitt. Diese Einheit wird in dem System gemäß Figur 2 eingesetzt. Die in den Figuren 3 und 4 dargestellten Systeme unterscheiden sich von dem System nach Figur 2 hinsichtlich der Betätigung der Verschlusseinrichtung (2), aus diesem Grund sind jeweils an der Verschlusseinrichtung (2) geringfügige Modifikationen notwendig. In den Ausführungsbeispielen sind die Systeme jeweils Bestandteil einer Waschmaschine und dienen zur Bestimmung der Oberflächenspannung von Waschlauge (3) im Laugenbehälter dieser Maschine.

Das System beinhaltet eine Kammer (1), die bis auf die Kapillare und eine oder mehrere Einlassöffnungen geschlossen ist. Die Waschlauge (3) steht vor der linken Kammerwand (12). In dieser Kammerwand (12) befindet sich eine zylindrische Sacklochbohrung (13) mit einem Durchmesser D, die kegelig ausläuft. Ihre Wände sind durch schmale Kanäle (14) erweitert, deren Funktion später erklärt wird. Von der Spitze der Sacklochbohrung (13) geht eine Durchgangsbohrung mit geringerem Durchmesser d durch die Kammerwand, diese bildet die eigentliche Kapillare (11). Die Kapillare (11) kann somit als kurze Röhre betrachtet werden, die eine erste Mündung besitzt, die zur Waschlauge (3) hin gerichtet ist und eine zweite Mündung, die zur Kammer (2) gerichtet ist. Die Tiefe der Sacklochbohrung (13) ist derart dimensioniert, dass die Länge der Kapillare (11) kleiner als ihr Durchmesser d ist.

In der Kammer (1) ist eine Verschlusseinrichtung (2) angeordnet. Diese besitzt einen tellerförmigen Grundkörper (21), der an der Kammerwand in axialer Richtung beweglich aufgehängt ist. Je nach Betätigungsvorrichtung ist die Aufhängung als Membran (22) (bei pneumatischem Antrieb) oder als Führung (bei elektromagnetischem Antrieb, nicht dargestellt) ausgebildet. Auf der der Kapillare (11) zugewandten Seite besitzt der Grundkörper (21) einen angeformten Stößel (23). Dieser ist zylindrisch ausgebildet und vom Durchmesser derart dimensioniert, dass er mit geringem Spiel in der Sacklochbohrung (13) geführt werden kann. Die Spitze des Stößels (23) geht von einem konischen Teil (24) in eine Reinigungsnadel (25) über, wobei letztere etwa den Durchmesser d der Kapillare (11) besitzt. Der konische Teil (24) trägt eine Dichtung (26), die in der Verriegelungsstellung an der kegelförmigen Fläche (15) der Sacklochbohrung (13) anliegt und so die Kapillare (11) luft- und flüssigkeitsdicht verschließt. Die Rückseite des Grundkörpers (21) geht in einen zylindrischen Ansatz (27) über, der in einer Bohrung (16) in der hinteren Kammerwand (17) geführt ist. Der Ansatz (27) ist von einer Schraubenfeder (28) umgeben, die sich auf der einen Seite am Grundkörper (21) und auf der anderen Seite an der Kammerwand (17) abstützt. Zusätzlich kann ein elektromagnetischer Antrieb (s. Figur 3) vorgesehen sein.

In Figur 1a befindet sich die Verschlusseinrichtung (2) in der Verriegelungsstellung. Die Reinigungsnadel (25) füllt dann die Kapillare (11) aus und sorgt so dafür, dass deren Geometrie erhalten bleibt. Die Dichtung (26) hat die Aufgabe, für den Verschluss der Kapillare (11) auf der Kammerinnenseite zu sorgen, um so ein Eindringen von Waschlauge (3) in die Kapillare (11) sicher zu verhindern. Für den nötigen Anpressdruck sorgt die Feder (28). Figur 1 b zeigt die Messstellung. Die Betätigung der Verschlusseinrichtung (2) erfolgt per Unterdruck in der rechten Kammerhälfte. Dieser wirkt an der Membran (22), welche die Reinigungsnadel (25) aus der Kapillare (11) heraus zieht. Dabei gibt die Dichtung (26) die kegelförmige Fläche (15) der Sacklochbohrung (13) frei. In dieser Stellung kann Luft aus der Kammer (1) durch die Kanäle (14) geführt und dann weiter durch die Kapillare (11) geführt werden, so dass in der Waschlauge (3) Blasen erzeugt werden.

### Die Funktion des Gesamtsystems ist in Figur 2 dargestellt:

Eine offene Zuleitung (201) steht mit der Umgebungsluft in Verbindung, wobei ein Filter (202) eventuelle Verunreinigungen aus der Luft entfernt. Nach dem Filter (202) verzweigt sich die Zuleitung (201) in drei Leitungen (203, 204, 205), in denen jeweils eine Drossel (206, 207, 208) angeordnet ist. Nach der Drossel (206) zweigt von der Leitung (203) eine Leitung (214) ab, an deren Ende ein Drucksensor (4) angeschlossen ist. In der mittleren Leitung (204) ist der Drossel (207) eine Pumpe (209) vorgeschaltet, deren Saugseite der Öffnung der Zuleitung (201) und deren Druckseite der Drossel (207) zugeordnet ist. Die beiden Leitungen (203) und (204) werden in die linke Seite (211) der Kammer geführt. Die rechte Leitung (205) mündet in die rechte Seite (212) der Kammer (1). Vor der Mündung zweigt eine Leitung (213) ab, in der eine weitere Pumpe (210) angeordnet ist. Diese Pumpe (210) steht saugseitig mit der Kammerseite (212) in Verbindung. Mit der Pumpe (209) werden die Blasen erzeugt. In der Leitung (204) zwischen der Pumpe (209) und der Drossel (207) wird ein Überdruck erzeugt, mit dem die Kapillare (11) versorgt wird. Die Pumpe (210) dient dazu, die Verschlusseinrichtung (2) zu bewegen und damit die Kapillare freizugeben. Beide Pumpen (209, 210) werden durch eine Steuereinrichtung (nicht dargestellt) mit Strom versorgt, welche in Verbindung mit der Auswerteschaltung (nicht dargestellt) zur zeitabhängigen Auswertung des Druckverlaufs steht. Steuereinrichtung und Auswerteschaltung können in der MikroprozessorSteuerung (nicht dargestellt) der Waschmaschine integriert sein.

### Der Ablauf ist wie folgt:

Zunächst wird die Pumpe (209) eingeschaltet. Damit wird ein Überdruck erzeugt, der sich auch über die Drossel (207) auf die Membran (22) der Verschlusseinrichtung (2) überträgt. Dadurch entsteht ein "flatterndes" Öffnen mit Blasenaustritt. Eine Messung ist in diesem Stadium aber nicht möglich, da der hohe Druck, der für die Membranbetätigung nötig ist, aufgebaut werden muss und erfasst wird. Der Druck der Blase kommt nicht am Drucksensor (4) an. Nun wird zusätzlich die Pumpe (210) eingeschaltet. Dadurch wird auf der Rückseite der Membran (22) in der rechten Kammerhälfte (212) ein Unterdruck erzeugt, so dass die Verschlusseinrichtung (2) durch diesen Unterdruck aus der Kapillare (11) herausgezogen wird und auch herausgezogen bleibt. Nun wird die Pumpe (209) ausgeschaltet und die Messung über den Drucksensor (4) beginnend mit der höchsten Startblasenfrequenz (z.B. 20 Hz) in den Messbereich hinein (10 Hz ... 1 Hz) durchgeführt. Bei Unterschreiten der minimalen Blasenfrequenz von 1 Hz wird die Pumpe (209) wieder eingeschaltet, um eine Eindringen von Waschlauge (3) sicher zu verhindern, da über die Drossel (206) eine Belüftung nach außen vorhanden ist. Dann wird die Pumpe (210) ausgeschaltet, so dass sich der Unterdruck in der rechten Kammerhälfte (212) über die Drossel (208) zur Umgebung hin abbaut und die Verschlusseinrichtung (2) in die Kapillare (11) bewegt. Nach dem Schließen der Kapillare (11) wird auch die Pumpe (209) abgeschaltet und durch die Belüftung über die Drossel (206) stellt sich nach und nach wieder der Umgebungsdruck am Drucksensor (4) ein.

Figur 3 zeigt ein System, bei dem die Bewegung der Verschlusseinrichtung (2) durch einen Elektromagneten erfolgt. Wie bei der vorangegangenen Variante wird die Kapillaröffnung durch einen Stößel (23) mit Reinigungsnadel (25) und Dichtung (26) gereinigt und abgedichtet. Auch hier steht eine Leitung (301) über einen zwischengeschalteten Filter (304) mit der Umgebungsluft in Verbindung. In der Leitung (301) ist eine Pumpe (307) angeordnet, deren Saugseite der Öffnung der Leitung und deren Druckseite einer nachgeschalteten Drossel (305) zugeordnet ist. Nach der Drossel (305) zweigt von der Leitung (301) eine Leitung (302) ab, welche durch den Drucksensor (4) abgeschlossen wird. Parallel zur Pumpe (307) ist über eine Leitung (303) eine Drossel (306) geschaltet. Die Leitung (301) mündet in die Kammer.

### Der Ablauf ist wie folgt:

Die Pumpe (307) saugt über den Filter (304) Luft an und komprimiert diese in dem Teil der Leitung (301) zwischen Pumpe (307) und Drossel (305). Über die Drossel (305) wird dieser hohe Druck in die Kammer (1) und damit in den Bereich der Kapillare (11) übertragen und ist am Drucksensor (4) messbar. Nun wird durch eine Bestromung der Magnetspule (308) des Elektromagneten über die Steuereinrichtung (nicht dargestellt) die Verschlusseinrichtung (2) aus der Kapillare (11) herausgezogen. Dabei wird zunächst ein Teil des Überdrucks im Bereich zwischen Drossel (305) und Kapillare (11) abgebaut, indem die komprimierte Luft durch die Kapillare (11) in die Waschlauge (3) entweicht. Während dieses Vorgangs entstehen kurzfristig sehr viele Blasen in der Waschlauge (3). Nun beginnt die eigentliche Messung. Die Pumpe (307) wird ausgeschaltet und der Druck, der zwischen der Pumpe (307) und der Drossel (305) herrscht, wird nach und nach geringer. Dementsprechend werden die verschiedenen Blasenfrequenzen für die Messung mit dem Drucksensor (4) durchgefahren (beginnend mit der höchsten Blasenfrequenz). Nach Unterschreiten der geringsten Blasenfrequenz von 1 Hz wird die Magnetspule (308) wieder stromlos gesetzt, so dass die Verschlusseinrichtung (2) die Kapillare (11) wieder verschließt. Durch die Drosseln (305) und (306) stellt sich nun nach und nach wieder der Umgebungsdruck am Drucksensor (4) ein.

Figur 4 zeigt ein System, bei dem sowohl die Druckluftzufuhr zur Kapillare (11) als auch die Betätigung der Verschlusseinrichtung (2) mit einer einzigen Pumpe (407) realisiert wird. Hierzu ist die Verschlusseinrichtung (2) an zwei Membranen (401, 402) aufgehängt, die die Kammer (1) in drei Kammerteile (403, 404, 405) aufteilen. Jedes Kammerteil (403, 404, 405) besitzt eine Zuleitung, die Leitung (406) zum rechten Kammerteil (405) steht direkt mit der Umgebungsluft (406) in Verbindung. Das einzige aktive Teil dieses Systems ist die Pumpe (407), die für die Luftkompression zur Blasenbildung sowie für alle Steueraufgaben eingesetzt wird. Die Pumpe (407) saugt Luft durch den Filter an (der Filter ist wegen der besseren Übersichtlichkeit wie 3 Filter 408, 409, 410 dargestellt). Diese wird durch das Ventil (411) in den Leitungsabschnitt zwischen Ventil (411), Ventil (412) und Drossel (414) gedrückt. Von hier aus gelangt sie weiter durch die Drossel (414) in den linken Kammerbereich (403). Dort entweicht die Luft ohne Widerstand durch das geöffnete Ventil (413). Parallel baut sich über das Ventil (412) ein Überdruck auf, der in den mittleren Kammerbereich (404) gelangt. Sobald ein bestimmter Druck (z.B. 30 mbar) in diesem Bereich überschritten ist, schließt das Ventil (413). Steigt der Druck weiter (z.B. über 80 mbar), so wird die Verschlusseinrichtung (2) aus der Kapillare (11) herausgezogen. Damit der Druck im Bereich der Kapillare (11) dabei für die Betätigung der Verschlusseinrichtung (2) eine möglichst geringe Rolle spielt, ist die Wirkfläche der im Bild rechts eingezeichneten Membrane (402) wesentlich größer als die Wirkfläche der links eingezeichneten Membrane (401). Nachdem das Ventil (413) schließt, steigt der Druck im linken Kammerbereich (403) an und sobald die Verschlusseinrichtung (2) geöffnet wird, treten Blasen aus der Kapillare (11) aus.

Danach bleibt die Pumpe (407) noch für eine Weile eingeschaltet, damit der Druck im Bereich des mittleren Kammerbereichs (404) noch weiter bis ca. 200 mbar ansteigt. Dann wird die Pumpe (407) ausgeschaltet.

Nun sind 2 Volumina zu betrachten, die als Druckspeicher dienen: Zum einen das Volumen zwischen dem Ventil (411), dem Ventil (412) und der Drossel (414), das als Luftspeicher für die Blasenerzeugung dient (im Folgenden "Kompressionsvolumen fürdie Blasenerzeugung" genannt) und zum anderen das Volumen zwischen Ventil (412), Drossel (415), Ventil (413) und Kammerteil (404), das den Druck für die Betätigungen der verschiedenen Elemente aufnimmt (im Folgenden "Betätigungsvolumen" genannt). Aus den beiden Volumen entweicht nun jeweils Luft. Die Luft aus dem Kompressionsvolumen entweicht über die Drossel (414) und dient für die Blasenerzeugung. Parallel entweicht Luft vom Betätigungsvolumen durch die Drossel (415) in die Umgebung (über Filter 410). Die Auslegung des Systems muss so dimensioniert sein, dass die Drossel (415) der Luft einen höheren Widerstand entgegensetzt als die Drossel (414). Damit fällt der Druck im Kompressionsvolumen für die Blasenerzeugung schneller als im Betätigungsvolumen.

So wird erreicht, dass während des fallenden Drucks im Kompressionsvolumen für die Blasenerzeugung die verschiedenen Blasenfrequenzen für die Messung erzeugt werden (beginnend mit der höchsten). Parallel baut sich der Druck im Betätigungsvolumen ab, nur geschieht das langsamer. Die Drossel (415) ist so ausgelegt, dass erst nach Unterschreiten der geringsten Blasenfrequenz der Druck im Betätigungsvolumen so weit abgesunken ist, dass die Verschlusseinrichtung (2) wieder die Kapillare (11) verschließt. Fällt der Druck weiter, so wird auch das Ventil (413) wieder geöffnet, wodurch wieder der Umgebungsdruck am Drucksensor (4) anliegt.

## Patentansprüche

1. Verfahren zur Bestimmung der Oberflächenspannung einer in einem Behälter befindlichen Lösung (3), insbesondere einer Tensidlösung, nach der Blasendruckmethode, mit einer Kapillare (11, 503) zur Einleitung eines gasförmigen Volumenstroms in die Lösung (3) und einem Drucksensor (4) zur Ermittlung des zeitabhängigen Druckverlaufs dieses Volumenstroms während der Blasenbildung,
**dadurch gekennzeichnet,**
**dass** zum Ende des Bestimmungsverfahrens der Volumenstrom **dadurch** unterbrochen wird, dass die Kapillare (11, 503) wenigstens auf einem Teil ihrer Länge über ihren gesamten Querschnitt verschlossen wird.

2. System zur Durchführung des Verfahrens zur Bestimmung der Oberflächenspannung nach Anspruch 1, umfassend eine Verschlusseinrichtung (2) für die Kapillare (11), welche von einer Messstellung in eine Verriegelungsstellung bewegbar ist, wobei in der Verriegelungsstellung die Kapillare (11) gegenüber der Lösung (3) flüssigkeitsdicht verschlossen ist,
**dadurch gekennzeichnet,**
**dass** die Kapillare aus einer Sacklochbohrung (13), die kegelig ausläuft und von der Spitze in eine Durchgangsbohrung (11) übergeht, gebildet ist, und dass die Verschlusseinrichtung (2) einen Stößel (23) mit einem konischen Teil (24) in der Spitze umfasst, der in der Verriegelungsstellung an der kegelförmigen Fläche (15) der Sacklochbohrung (13) anliegt und so die Kapillare verschließt.

3. System nach Anspruch 2, wobei die Ermittlung des zeitabhängigen Druckverlaufs des Volumenstroms durch eine Auswerteschaltung erfolgt,
**gekennzeichnet durch** eine Steuereinrichtung zur Betätigung der Verschlusseinrichtung (2, 502), welche in Verbindung mit der Auswerteschaltung steht.

4. System nach einem der Ansprüche 2 oder 3,
**dadurch gekennzeichnet,**
**dass** die Länge der Kapillare (11) höchstens so groß wie ihr Durchmesser ist.

5. System nach mindestens einem der Ansprüche 2 bis 4,
**dadurch gekennzeichnet,**
**dass** die Kapillare (11) eine erste Mündung besitzt, die zur Lösung (3) hin gerichtet ist und eine zweite Mündung, die in eine Kammer (1) mündet, und dass die Verschlusseinrichtung (2) eine Reinigungsnadel (25) besitzt, welche vom Kammerinneren her in die Kapillare (11) fahrbar ist.

6. System nach Anspruch 5,
**dadurch gekennzeichnet,**
**dass** die Reinigungsnadel (25) von einer Dichtung (26) umgeben ist, welche in der Verriegelungsstellung der Verschlusseinrichtung (2) an der Wand (15) der Kammer (1) anliegt, in welche die Kapillare (11) mündet.

7. System nach mindestens einem der Ansprüche 4 oder 5,
**dadurch gekennzeichnet,**
**dass** die Verschlusseinrichtung (2) pneumatisch bewegbar ist.

8. System nach mindestens einem der Ansprüche 4 oder 5,
**dadurch gekennzeichnet,**
**dass** die Verschlusseinrichtung (2) elektromagnetisch bewegbar ist.

## Claims

1. Method of determining the surface tension of a solution (3) situated in a container, more especially a surfactant solution, in accordance with the bubble pressure method, by using a capillary tube (11), for introducing a gaseous volumetric flow into the solution (3), and a pressure sensor (4) for detecting the time-dependent pressure development of this volumetric flow during the bubble formation, **characterised in that**, at the end of the determination method, the volumetric flow is interrupted when the capillary tube (11) is closed over its entire cross-section, at least over a portion of its length.

2. System for carrying out the method of determining the surface tension according to claim 1, said system including a closure means (2) for the capillary tube (11), which is displaceable from a measuring position into a locking position, the capillary tube (11) being closed in the locking position in a liquid-tight manner relative to the solution (3), **characterised in that** the capillary tube is formed from a blind-end bore (13), which extends conically and passes from the tip into a through-bore (11), and **in that** the closure means (2) includes a plunger (23) with a conical portion (4) in the tip, which plunger abuts, in the locking position, against the conical face (15) of the blind-end bore (13) and thus closes the capillary tube.

3. System according to claim 2, wherein the time-dependent pressure development of the volumetric flow is detected by an evaluation circuit, said system being **characterised by** a control means for actuating the closure means (2), which communicates with the evaluation circuit.

4. System according to one of claims 2 or 3, **characterised in that** the length of the capillary tube (11) is, at most, as great as its diameter.

5. System according to at least one of claims 2 to 4, **characterised in that** the capillary tube (11) possesses a first opening, which is directed towards the solution (3), and a second opening, which terminates in a chamber (1), and **in that** the closure means (2) has a cleansing needle (25) which is displaceable from the chamber interior into the capillary tube (11).

6. System according to claim 5, **characterised in that** the cleansing needle (25) is surrounded by a seal (26), which abuts, in the locking position of the closure means (2), against the wall (15) of the chamber (1) in which the capillary tube (11) terminates.

7. System according to at least one of claims 4 or 5, **characterised in that** the closure means (2) is pneumatically displaceable.

8. System according to at least one of claims 4 or 5, **characterised in that** the closure means (2) is electromagnetically displaceable.

## Revendications

1. Procédé de détermination de la tension superficielle d'une solution (3) se trouvant un récipient, en particulier d'une solution d'agent tensioactif, selon la méthode de la pression de bulle, avec un capillaire (11) pour introduire un débit volumique gazeux dans la solution (3) et un capteur de pression (4) pour déterminer la variation de pression en fonction du temps de ce débit volumique pendant la formation de bulles,
**caractérisé par le fait**
**qu'**à la fin du procédé de détermination le débit volumique est interrompu en fermant le capillaire (11) sur toute sa section au moins sur une partie de sa longueur.

2. Système pour réaliser le procédé de détermination de la tension superficielle selon la revendication 1, comprenant un dispositif de fermeture (2) pour le capillaire (11), lequel est déplaçable d'une position de mesure dans une position de verrouillage, le capillaire (11) étant fermé de manière étanche aux liquides par rapport à la solution (3) dans la position de verrouillage,
**caractérisé par le fait**
**que** le capillaire est formé d'un trou borgne (13) qui se termine en cône et passe de la pointe à un trou débouchant (11) et que le dispositif de fermeture (2) comprend un coulisseau (23) avec une partie conique (4) à la pointe qui, dans la position de verrouillage, vient en appui sur la surface conique (15) du trou borgne (13) et ferme ainsi le capillaire.

3. Système selon la revendication 2 dans lequel la détermination de la variation de pression en fonction du temps du débit volumique est effectuée par un circuit d'évaluation,
**caractérisé par** un dispositif de commande servant à actionner le dispositif de fermeture (2) qui est en liaison avec le circuit d'évaluation.

4. Système selon l'une des revendications 2 ou 3,
**caractérisé par le fait**
**que** la longueur du capillaire (11) est au maximum aussi grande que son diamètre.

5. Système selon l'une des revendications 2 à 4,
**caractérisé par le fait**
**que** le capillaire (11) possède une première ouverture qui est dirigée vers la solution (3) et une deuxième ouverture qui débouche dans une chambre (1) et que le dispositif de fermeture (2) possède une aiguille de nettoyage (25) qui est déplaçable depuis l'intérieur de la chambre dans le capillaire (11).

6. Système selon la revendication 5,
**caractérisé par le fait**
**que** l'aiguille de nettoyage (25) est entourée par un joint (26) qui, dans la position de verrouillage du dispositif de fermeture (2), s'appuie sur la paroi (15) de la chambre (1) dans laquelle le capillaire (11) débouche.

7. Système selon au moins l'une des revendications 4 ou 5,
**caractérisé par le fait**
**que** le dispositif de fermeture (2) est déplaçable pneumatiquement.

8. Système selon au moins l'une des revendications 4 ou 5,
**caractérisé par le fait**
**que** le dispositif de fermeture (2) est déplaçable électromagnétiquement.
